# EUROPÄISCHE PATENTANMELDUNG

(11) **EP 2 287 751 A1**
(43) Veröffentlichungstag der Anmeldung: **23.02.2011**
(21) Anmeldenummer: 10075352.4
(22) Anmeldetag: 17.08.2010
(51) Int. Cl.: G06F 17/30

(54) **Recherchensystem und Verfahren zur Informationssuche**

(30) Priorität: 17.08.2009 EP 09075375; 17.08.2009 DE 102009028601
(71) Anmelder: Deutsche Telekom AG, 53113 Bonn (DE)
(72) Erfinder: Liu Jin, 12357 Berlin (DE); Zhou Jianshen, 12357 Berlin (DE); Burkhardt Felix, 10551 Berlin (DE); Runge Fred, 15806 Wünsdorf (DE); Gulla Jon Atle, 7013 Trondheim (NO)
(74) Vertreter: Drosch, Ulrich

(57) **Zusammenfassung**

Die Erfindung betrifft ein elektronisches Recherchensystem zur Suche nach Informationen in elektronisch gespeicherten Daten.

Das Recherchensystem besteht aus einer Verarbeitungseinrichtung (1) mit Benutzerschnittstellen (2) und aus Datenspeichermitteln, in denen zumindest recherchierbare Informationen enthaltende Daten (3), diese Informationen indexierende Daten (4) und wenigstens eine, die Informationen abbildende Klassenstruktur (5) gespeichert sind. Innerhalb dieser Klassenstruktur (5) bilden Bergriffe der durch Daten abgebildeten Informationen Instanzen, welche Klassen mit zugehörigen innerhalb der Klassenstruktur (5) vererbten Attributenzugeordnet sind. Die Elemente der Klassenstruktur (5) und zwischen ihnen nach einem Regelwerk mittels einer Inferenzeinheit herstellbare Verknüpfungen stellen eine Ontologie dar. Erfindungsgemäß sind in den Datenspeichermitteln ein Regelwerk (8) mit Regeln, durch deren Anwendung eine Suchanfrage expandiert wird und eine Regelwerk (6) mit Regeln, durch deren Anwendung ein zu der erweiterten Suchanfrage erhaltenes vorläufiges Suchergebnis im Wege einer Reduktion und/oder eines Ranking der Treffer in ein finales Suchergebnis überführt wird.

## Beschreibung

Die Erfindung betrifft ein elektronisches Recherchensystem und ein Verfahren zur Suche nach Informationen in elektronisch gespeicherten Daten. Sie bezieht sich dabei auf ein ontologiebasiertes Recherchensystem mit Benutzerschnittstellen, welches die Suche von Informationen in einem gegebenenfalls umfangreichen Datenbestand ermöglicht, welcher sowohl lokal als auch in auf verteilt in einem Netzwerk angeordneten Datenspeichermitteln gehalten sein kann.

Die Suche von Informationen in umfangreichen elektronischen Datenbeständen erfolgt nach dem Stand der Technik mit Hilfe von Katalogen, in denen ein auf die in dem Datenbestand enthaltenen Informationen verweisender Index gehalten wird. Darüber hinaus ist es bekannt, sich bei der Suche nach Informationen Ontologien zu bedienen, welche die Informationen in einer Klassenstruktur abbilden, die aus Klassen und den Klassen zugeordneten, innerhalb der betreffenden Klassenstruktur vererbten Attributen bestehen. Mit Hilfe von diesen Ontologien zugeordneten Regeln sind dabei Schlussfolgerungen möglich, durch deren Einsatz mittels geeigneter Inferenzeinheiten ein verbesserter Zugriff auf die Informationen ermöglicht ist beziehungsweise ihr Wiederauffinden in einem umfangreichen Datenbestand beschleunigt wird.
Beispielsweise ist aus der EP 10 64 606 B1 ein der Recherche dienendes Datenverarbeitungssystem bekannt, bei dem eine Vielzahl von Suchformulierungen als Knoten und Kanten eines semantischen Netzwerks gespeichert sind, in welchem die Knoten Suchanfragen enthalten, die durch die Kanten im Sinne einer Ontologie mit einem zugehörigen Regelwerk verknüpft sind. Mit Hilfe dieses semantischen Netzwerks lassen sich komplexe Suchanweisungen generieren, welche zur automatischen Generierung von Inhaltsangaben für Textdokumente genutzt werden.
Ein vergleichbarer Ansatz ist in der DE 101 03 845 B4 beschrieben. Hier wird ein flexibler Zugriff auf die Informationen dadurch ermöglicht, dass die Informationen in einer Klassenstruktur mit Klassen und innerhalb dieser Klassenstruktur vererbbaren Attributen abgebildet sind und die Elemente dieser Klassenstruktur mit Hilfe eines Regelwerks miteinander verknüpft werden, welches bei der Eingabe eines Abfragebefehls zur Suche von Informationen auf die Klassenstruktur angewendet wird. Hierdurch werden bei der Suche nach Informationen auch die diesen Informationen zugrunde liegende Struktur und die zwischen den Elementen dieser Struktur bestehenden logischen Beziehungen berücksichtigt, so dass bereits eine relativ einfache Suchanfrage zu einem komplexen Suchvorgang führt.
Durch die US 2002/107853 werden ein System und ein Verfahren für eine personalisierte Suche vorgestellt, nach welchen ein Suchergebnis unter Nutzung eines Klassenmodells nach Nutzervorgaben gefiltert wird. Mit dieser Lösung ist es möglich, die Aussagekraft des Suchergebnisses durch gezielte Selektion der zu einer Suchanfrage erhaltenen Treffer zu erhöhen, wobei das beschriebene System lernfähig gestaltet ist. Allerdings leistet die beschriebene Lösung keinen Beitrag zu einem möglichst vollständigen Suchergebnis auch für den Fall, dass ein Benutzer eine Suchanfrage eventuell eher ungünstig formuliert, so dass möglicherweise einige als relevant anzusehende Suchergebnisse nicht ermittelt werden.

Aufgabe der Erfindung ist es, eine alternative Lösung zu schaffen, deren Schwerpunkt insbesondere im Erhalt eines zuverlässigen und aussagekräftigen Suchergebnisses zu sehen ist, welches möglichst alle relevanten Informationen enthält, dabei aber dennoch hinsichtlich der Präsentation des Suchergebnisses der Relevanz der erhaltenen Treffer in geeigneter Weise Rechnung trägt. Hierzu sind ein elektronisches Recherchensystem bereitzustellen und ein Verfahren anzugeben.

Die Aufgabe wird durch ein Recherchensystem mit den Merkmalen des Patentanspruchs 1 gelöst. Vorteilhafte Aus- beziehungsweise Weiterbildungen sind durch die Unteransprüche gegeben. Ein die Aufgabe lösendes Verfahren wird durch den verfahrensbezogenen Patentanspruch charakterisiert.

Das zur Lösung der Aufgabe vorgeschlagene elektronische Recherchensystem verfügt über eine Verarbeitungseinrichtung mit Benutzerschnittstellen, über welche Suchanfragen eines Nutzers von dem System entgegengenommen werden und dazu ermittelte Suchergebnisse für den Nutzer ausgegeben werden. Bestandteil des Recherchensystems sind ferner Datenspeichermittel, die als integraler Teil der Verarbeitungseinrichtung ausgebildet und/oder extern zu der Verarbeitungseinrichtung angeordnet, aber jedenfalls mit ihr in eine Wirkverbindung gebracht sind. In den Datenspeichermitteln sind zumindest recherchierbare Informationen enthaltende Daten, diese Informationen indexierende Daten, wenigstens eine, die Informationen abbildende Klassenstruktur und von der Verarbeitungseinrichtung ausführbare Programmdateien gespeichert. Innerhalb der vorgenannten Klassenstruktur bilden Begriffe der durch die Klassenstruktur abgebildeten Informationen Instanzen, welche Klassen angehören, denen jeweils innerhalb der betreffenden Klassenstruktur vererbte Attribute zugeordnet sind. Die Elemente der Klassenstruktur, nämlich die Klassen und deren Attribute sowie die zwischen ihnen durch Anwendung entsprechender Regeln herstellbaren Verknüpfungen bilden eine Ontologie aus. Dabei erfolgt die Herstellung der Verknüpfungen zwischen Elementen der Klassenstruktur unter Berücksichtigung ihrer Attribute durch die Anwendung von Regeln, welche in Form beziehungsweise als Bestandteil von Regelwerken ebenfalls in den Datenspeichermitteln hinterlegt sind. Die vorgenannten in den Datenspeichermitteln gespeicherten Daten, aber insbesondere die die recherchierbaren Informationen enthaltenden Daten können beispielsweise in einer Datenbankstruktur, das heißt in Form von Datenbankeinträgen einer jeweiligen Datenbank, gespeichert sein.
Erfindungsgemäß umfassen die in den Datenspeichermitteln des elektronischen Recherchensystems gespeicherten Regelwerke zumindest ein von einer Inferenzeinheit des Systems auf eine von diesem entgegengenommene Suchanfrage anzuwendendes Regelwerk und ein Regelwerk, welches auf ein zu der betreffenden Suchanfrage ermitteltes vorläufiges Suchergebnis angewendet wird. Dabei wir das erstgenannte Regelwerk von Regeln gebildet, durch deren Anwendung auf eine Suchanfrage - genauer gesagt auf in der betreffenden Suchanfrage als Suchbegriffe enthaltene Elemente der schon angesprochenen Klassenstruktur oder Klassenstrukturen und deren Attribute - diese Suchanfrage um weitere Suchbegriffe und/oder um zwischen den Suchbegriffen bestehende Relationen erweitert wird. Der sich anschließende eigentliche Suchvorgang zur Suche nach Informationen erfolgt dann nicht unter Verwendung der von dem Recherchensystem ursprünglich entgegengenommenen Suchanfrage, sondern bezogen auf die entsprechend erweiterte Suchanfrage. Hierdurch wird ein Suchergebnis erhalten, welches gegenüber einem zu der ursprünglichen Suchanfrage erhaltenen Suchergebnis im Allgemeinen erheblich umfangreicher und somit vollständiger ist und dabei vorzugsweise auch Treffer aufweist, welche ausschließlich auf der Basis der ursprünglichen Suchanfrage nicht ermittelt worden wären, von denen aber vorzugsweise eine Mehrzahl dennoch für einen Nutzer des Systems relevant ist. Das für eine solche erweiterte Suchanfrage erhaltene Suchergebnis wird jedoch erfindungsgemäß zunächst nur als vorläufiges Suchergebnis betrachtet, welches, da es im Allgemeinen neben für den Nutzer tatsächlich relevanten Treffen auch weniger oder überhaupt nicht relevante Treffer enthält, einer ebenfalls ontologiebasierten Nachbehandlung beziehungsweise Nachbearbeitung unterzogen wird. Dazu werden wiederum von der im Zusammenhang mit der Erweiterung (Expansion) der Suchanfrage erwähnten oder einer anderen als Teil der Verarbeitungseinheit des Recherchensystems ausgebildeten Inferenzeinheit auf das vorläufige Suchergebnis - genauer gesagt auf in einem solchen Suchergebnis enthaltene Elemente der Klassenstruktur oder Klassenstrukturen und deren Attribute - Regeln eines weiteren in den Datenspeichermitteln des Recherchensystems gespeicherten Regelwerks angewendet. Im Ergebnis der Anwendung dieser Regeln auf die in dem vorläufigen Suchergebnis enthaltenen Elemente der Klassenstruktur oder Klassenstrukturen und deren Attribute erfolgt eine Reduktion und/oder ein Ranking der die erweiterte Suchanfrage erfüllenden Treffer. Das vorläufige Suchergebnis wird dabei in ein für den Nutzer auszugebendes finales, im Allgemeinen gegenüber dem vorläufigen Suchergebnis verbessertes Suchergebnis überführt.

Dem erfindungsgemäßen Recherchensystem liegt demnach die insoweit ebenfalls beanspruchte Verfahrensweise zugrunde, zur Vermeidung eines Informationsverlustes beziehungsweise des Nichtauffindens eigentlich relevanter Treffer aufgrund einer eventuell nicht umfassend genug formulierten Suchanfrage, jede Suchanfrage zunächst, wenn möglich, ontologiebasiert zu erweitern und dann das dazu erhaltene Suchergebnis durch eine Reduktion und/oder ein Ranking der Treffer unter dem Gesichtspunkt ihrer ontologiebasiert beurteilten Relevanz gewissermaßen zu verfeinern. Die Ermittlung der in einer ursprünglichem, dem System übergebenen Suchanfrage und in dem vorläufigen Suchergebnis enthaltenen Elemente der die recherchierbaren Informationen in dem Recherchensystem abbildenden Klassenstruktur/Klassenstrukturen erfolgt dabei im Wege der linguistischen Analyse der Suchanfrage und des vorläufigen Suchergebnisses sowie der semantischen Interpretation darin enthaltener Begriffe. Hierzu stehen als solches bekannte Software-Tools zur Verfügung, die in Form der schon angesprochenen Programmdateien ebenfalls in Datenspeichermitteln des Recherchensystems gehalten werden, aber als solches nicht Gegenstand der Erfindung sind. So werden beispielsweise im Rahmen einer Datennormalisierung alle Kleinbuchstaben in Großbuchstaben oder alle Großbuchstaben in Kleinbuchstaben umgewandelt, Zahlenangaben in einheitliche Zahlenformate, wie Währungs- oder Zeitformate, überführt und Abkürzungen in ihre Entsprechungen konvertiert. Durch so genanntes Tokenizing werden enthaltene Worteinheiten, das heißt insbesondere Wörter und/oder begriffliche Einheiten aus mehreren Wörtern, wie beispielsweise "New York", ermittelt und gegebenenfalls als zusammengehörig gekennzeichnet. Die Bildung derartiger Token wird beispielsweise mittels entsprechender Komponenten des verfügbaren Softwaresystems Lucene ermöglicht. Das genannte Tool, ein freies Software-Projekt der Apache Software Foundation, ermöglicht es zudem, mittels entsprechender, zu diesem Werkzeug gehörender Komponenten im Rahmen einer morphologischen Analyse unnötige Stopp- beziehungsweise Funktionswörter, wie bestimmte oder unbestimmte Artikel, Konjunktionen (wie "und", "oder") und Präpositionen (wie "an", "in", "vor") zu beseitigen. Im Wege des so genannten, ebenfalls durch das Tool Lucene ermöglichen Part-of-speech Tagging (POS) werden die Wortarten der in der ursprünglichen Suchanfrage und dem vorläufigen Suchergebnis enthaltener Textteile ermittelt. Insbesondere für Nomen beziehungsweise Substantive, aber auch für andere Wortarten kann dann durch Vergleich festgestellt werden, ob es sich bei ihnen um Elemente beziehungsweise Instanzen der die recherchierbaren Informationen abbildenden Klassenstruktur/Klassenstrukturen handelt, wobei gegebenenfalls andere der durch POS ermittelte Wortarten Relationen zwischen diesen Nomen herstellen. Bei den Regeln der zur Expansion von Suchanfragen und zur Nachbehandlung der zu diesen ermittelten vorläufigen Suchergebnisse verwendeten Regelwerke handelt es sich um mehr oder weniger komplexe "Wenn-Dann-Aussagen", durch welche Bedingungen und die sich im Falle ihres Eintritts ergebenden Schlussfolgerungen festgelegt werden. Diese "Wenn-Dann-Aussagen" sind je nach Implementierung, das heißt insbesondere je nach verwendeter Programmiersprache, - für den Fachmann geläufig - in unterschiedlicher Syntax abgefasst. Beispiele zur Formulierung derartiger Regeln, nicht aber zu deren Syntax in einer Programmiersprache sollen später im Rahmen der Erläuterung von Ausführungsbeispielen der Erfindung erfolgen.
Vorzugsweise ist das erfindungsgemäße Recherchensystem so ausgebildet, dass es einem Benutzer ermöglicht, das zur Nachbearbeitung des vorläufigen Suchergebnisses verwendete Regelwerk zur Berücksichtigung eigener Präferenzen zu verändern. Dies schließt für den Benutzer die Möglichkeit ein, das für die Nachbearbeitung des vorläufigen Recherchenergebnisses verwendete Regelwerk durch weitere Regeln zu ergänzen. Hierzu muss der Benutzer vorzugsweise die in dem Recherchensystem verwendete Syntax zur Abfassung entsprechender Regeln kennen. Denkbar ist es aber auch, dass ihn das Recherchensystem in einem entsprechenden Modus hierbei durch geeignete formularartige oder graphische Masken unterstützt.
Entsprechend einer besonders vorteilhaften Weiterbildung der Erfindung ist es vorgesehen, dass die Daten zur Indexierung der in den Datenspeichermitteln gespeicherten Informationen um zusätzliche, die Informationen betreffende Metadaten und Annotationen ergänzt sind. Durch die Berücksichtigung solcher Metadaten und Annotationen wird die Zuverlässigkeit mit welcher in den gespeicherten Daten enthaltene Informationen wieder gefunden werden erhöht. Zwar erhöht sich hierdurch im Allgemeinen auch die Zahl der zu einer Suchanfrage gefundenen Treffer. Jedoch wird das insoweit zunächst möglicherweise relativ umfangreiche vorläufige Suchergebnis anschließend entsprechend dem erfindungsgemäßen Grundprinzip nachbearbeitet und so wieder auf die nach der zugrunde liegenden Ontologie relevantesten Treffer reduziert. Dem Benutzer wird somit über mindestens eine entsprechende Systemschnittstelle, vorzugsweise über ein Display, ein Suchergebnis präsentiert, welches mit hoher Wahrscheinlichkeit alle bezüglich seiner Suchanfrage relevanten, in irgendeiner Form im System gespeicherten Informationen enthält. Vorzugsweise erfolgt dabei die Erweiterung des die im System abgespeicherten Information (Content) erweiternden Indexes ebenfalls ontologiebasiert, das heißt durch Anwendung eines weiteren im System hinterlegten Regelwerks auf die mindestens eine die recherchierbaren Informationen abbildende Klassenstruktur und auf in eventuellen Annotationen beziehungsweise Metadaten enthaltene Elemente dieser Klassenstruktur und deren Attribute. Bei den genannten Metadaten beziehungsweise Annotationen kann es sich beispielsweise um maschinell lesbaren semantischen Content handeln, welcher Stichwörter zu weiterführenden, die Informationen betreffenden Details umfasst.
Wie bereits ausgeführt, können die die jeweiligen Daten aufnehmenden Speichermittel unmittelbarer Bestandteil der Verarbeitungseinrichtung beziehungsweise des eigentlichen Recherchensystems sein oder aber in externen, im Zugriff der Verarbeitungseinrichtung befindlichen Einheiten angeordnet beziehungsweise ausgebildet sein. Demgemäß werden bei einer möglichen Ausbildungsform der Content beziehungsweise die recherchierbaren Informationen und die sie indexierenden Daten sowie die gegebenenfalls den Index erweiternden Annotationen und Metadaten von einander räumlich getrennt gespeichert. Bei einer entsprechenden Ausbildung sind beispielsweise nur die Daten, welche die recherchierbaren Informationen indexieren und die sie gegebenenfalls erweiternden Annotationen und Metadaten, in Speichermitteln der Verarbeitungseinrichtung beziehungsweise des eigentlichen Recherchensystems als solchem, das heißt als Bestandteil seiner Kernkomponenten gespeichert. Diese Daten bilden hier einen Verweis auf die in externen in Speichermitteln gehaltenen Daten mit den recherchierbaren Informationen. Letztere können dabei beispielsweise in den Ressourcen eines Netzwerks, also etwa in auf unterschiedlichen Servern gehaltenen Datenbanken, gespeichert sein.
Das erfindungsgemäße System kann insbesondere im Hinblick auf die Übergabe von Suchanfragen über unterschiedliche Benutzerschnittstellen von als solches bekannter Art verfügen. Es weist vorzugsweise mindestens eine Tastatur zur Eingabe textbasierter Suchanfragen auf. Ferner können diese Benutzerschnittstellen ein Zeigegerät, wie eine Computer-Maus oder einen Griffel, umfassen, welche eine durch eine grafische Benutzeroberfläche unterstützte Eingabe von Suchanfragen ermöglichen. Denkbar ist es hierbei zum Beispiel, dass die Suchanfrage durch die Aktivierung von Checkboxen einer grafischen Benutzeroberfläche oder dergleichen an das System beziehungsweise dessen Verarbeitungseinrichtung übergeben wird.
Eine weitere vorteilhafte Möglichkeit besteht darin, eine Suchanfrage durch eine Spracheingabe zu übergeben. In diesem Falle verfügt das System zur Entgegennahme von Kommandos und Spracheingaben sowie deren Verarbeitung zumindest über ein Mikrofon und eine Spracherkennungseinheit, welche insoweit als erweiterter Bestandteil einer Schnittstelle zur Sprachsteuerung des Systems aufgefasst wird.
Im Sinne einer multimodalen Bedienbarkeit des Systems können die vorgenannten oder einzelne der vorgenannten Benutzerschnittstellen zur Eingabe von Suchanfragen selbstverständlich auch in Kombination als Bestandteil des erfindungsgemäßen Recherchensystem realisiert sein. Sie können insbesondere auch Bestandteil eines mobilen Geräts für den Zugriff auf ein Netzwerk beziehungsweise das Internet sein.
Als bevorzugtes Ausgabemittel, das heißt Benutzerschnittstelle für die Ausgabe von Suchergebnissen, beispielsweise in Listenform, dient ein Bildschirm beziehungsweise Display. Dies schließt selbstverständlich auch die Möglichkeit einer audiovisuellen Präsentation von Suchergebnissen mit ein, bei welcher gegebenenfalls auch eine Sprachausgabe von Suchergebnissen erfolgt.

Anhand von Zeichnungen sollen nachfolgend nochmals einige Aspekte der Erfindung verdeutlicht werden. In den zugehörigen Zeichnungen zeigen:
- Fig. 1: ein Strukturschema einer möglichen Ausbildungsform des erfindungsgemäßen Recherchensystems,
- Fig. 2:: ein Strukturschema einer gegenüber der Fig. 1 geringfügig abgewandelten Ausbildungsform des erfindungsgemäßen Recherchen- systems.

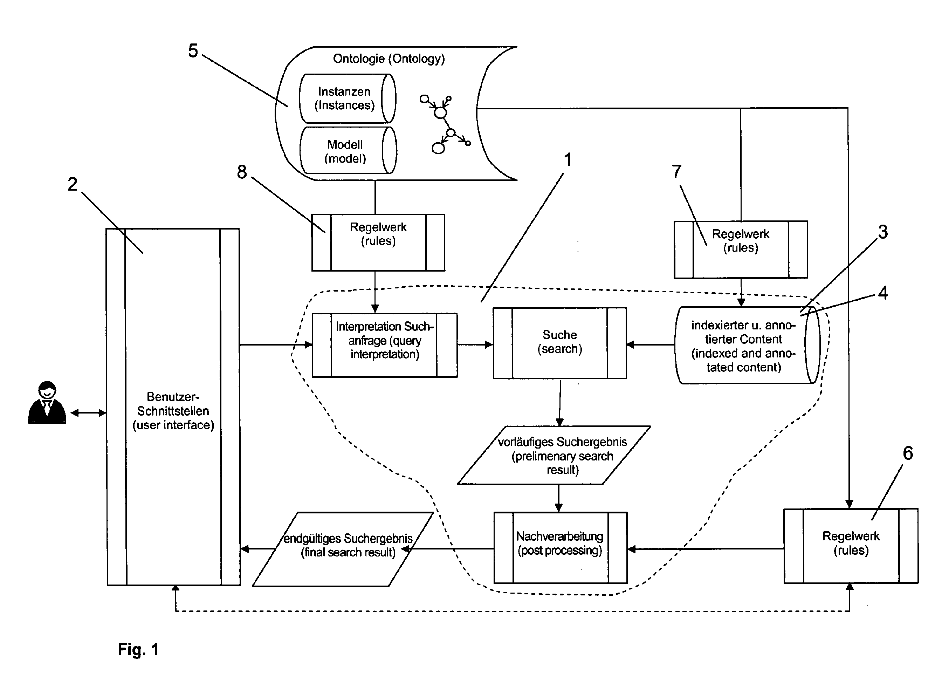

Die Fig. 1 zeigt ein Strukturschema für eine mögliche Ausbildungsform des erfindungsgemäßen Recherchensystems. Das dargestellte Schema veranschaulicht anordnungsbezogene Bestandteile des erfindungsgemäßen Recherchensystems, deren strukturelle Beziehungen untereinander und Aspekte des Ablaufs bei der Bearbeitung einer Suchanfrage durch das System in einer gemischten Darstellung. Demnach verfügt das anhand der Figur beispielhaft erläuterte Recherchensystem über Benutzerschnittstellen 2 der zuvor genannten Art, beispielsweise über eine Tastatur oder über eine Spracheingabeeinheit, über welche ein Benutzer des Systems mit diesem in Kontakt treten und eine entsprechende Suchanfrage an das System richten kann. In der Verarbeitungseinrichtung 1 des Recherchensystems wird eine entsprechende Suchanfrage zunächst linguistisch analysiert und semantisch interpretiert, wobei aus dieser Suchbegriffe extrahiert werden, welche als Elemente beziehungsweise Instanzen in einer ebenfalls im System gespeicherten, die recherchierbaren Informationen im System abbildenden Klassenstruktur 5 aus Klassen und zugehörigen Attributen erfasst sind und im Wege des Vergleichs gefunden werden. Die Suchanfrage wird dann im Zuge ihrer Aufbereitung ontologiebasiert in eine erweiterte Suchanfrage überführt. Dazu wendet eine nicht als Detail gezeigte Inferenzeinheit der Verarbeitungseinrichtung 1 ein zu diesem Zweck in den Speichermitteln des Systems hinterlegtes Regelwerk 8 auf die vorgenannten als Suchbegriffe in der Suchanfrage enthaltenden Elemente der Klassenstruktur 5 und deren Attribute an. Im Ergebnis dessen wird die Suchanfrage um zusätzliche Suchbegriffe und/oder zwischen den Suchbegriffen bestehende Relationen erweitert. Auf der Grundlage der insoweit erweiterten Suchanfrage werden die als Daten 3 im System abgespeicherten Informationen mit Hilfe sie indexierender Daten 4 gesucht, wobei der betreffende Index bei dem dargestellten Beispiel noch um in Bezug zu den im System erfassten Informationen stehende Annotationen und Metadaten erweitert ist. Ergebnis dieses Suchlaufs ist ein erstes, als vorläufiges Recherchenergebnis behandeltes Suchergebnis, vorzugsweise in Form einer gerankten Liste von Treffern, welche die erweiterte Suchanfrage erfüllen. Erfindungsgemäß wird jedoch dieses vorläufige Ergebnis durch die Verarbeitungseinrichtung beziehungsweise eine Inferenzeinheit der Verarbeitungseinrichtung ontologiebasiert nochmals nachbearbeitet. Hierzu wird ein für diesen Zweck im System hinterlegtes Regelwerk 6 auf die die im System gehaltenen Informationen abbildende Klassenstruktur 5 angewendet. Dabei werden die in dem vorläufigen Suchergebnis enthaltenen Elemente dieser Klassenstruktur 5, nämlich die Klassen mit den von ihnen erfassten Instanzen und deren innerhalb der Klassenstruktur vererbte Eigenschaften nach den im Regelwerk 6 enthaltenen Regeln miteinander und mit ihren Ausprägungen in dem vorläufigen Suchergebnis verknüpft. Im Ergebnis dessen werden beispielsweise Redundanzen und/oder Widersprüche aufgelöst und so das vorläufige Suchergebnis in ein präzisiertes finales Suchergebnis mit einer vorzugsweise bezüglich ihres Umfangs reduzierten und vorzugsweise darüber hinaus neu gerankten Trefferliste überführt. Dieses endgültige Suchergebnis wird dann dem Benutzer als Antwort auf seine Suchanfrage über eine hierfür vorgesehene, in der Abbildung nicht gezeigte Benutzerschnittstelle 2, insbesondere ein Display, präsentiert. Bei der in der Figur gezeigten Ausbildungsform kann ein Benutzer des Recherchensystems das zur Nachbearbeitung des vorläufigen Suchergebnisses dienende Regelwerk 6, sofern er dies wünscht, verändern beziehungsweise gegebenenfalls auch erweitern. Dies wird in der Zeichnung durch die untere, das Regelwerk 6 mit der/den Benutzerschnittstellen 2 verbindende, beidseits mit einem Pfeil versehene Linie symbolisiert. Demnach hat der Benutzer über die Benutzerschnittstellen 2 Zugriff auf dieses Regelwerk 6 und kann dieses im Hinblick beispielsweise auf die Berücksichtigung eigener Vorlieben bei der Nachbearbeitung des vorläufigen Suchergebnisses modifizieren. Gegebenenfalls kann diese Möglichkeit der Bearbeitung des Regelwerks 6 außerdem mit einer hier nicht gezeigten Benutzerverwaltung gekoppelt sein, so dass sich der Benutzer beispielsweise zur Vornahme entsprechender Änderungen am Regelwerk 6 gegenüber dem System authentifizieren muss und/oder ausgehend von einem Regelwerk 6 mit Grundregeln für unterschiedliche Benutzer des Systems mit unterschiedlichen Vorlieben verschiedene Regelsätze für die Nachbearbeitung des vorläufigen Suchergebnisses im System verwaltet werden können.
Als Beispiele für den Ablauf einer Suche sollen die folgenden vier Suchanfragen betrachtet werden, die vom Nutzer des Systems eingegeben werden:
1. "Neue Thriller mit Bruce Willis"
2. "Ähnlich wie: der schwarze Falke"
3. "Ich möchte den letzten Film von Brangelina"
4. "Bully und Winnetou"

Zunächst werden die einzelnen Wörter der Suchanfrage linguistisch analysiert und semantisch interpretiert sowie mit den Annotationen der Ontologie verglichen. Dabei werden die nachfolgend durch entsprechende Unterstreichung gekennzeichneten Suchbegriffe als Elemente der Ontologie beziehungsweise Klassenstruktur erkannt, nämlich:
1. "Neue Thriller mit Bruce Willis"
2. "Ähnlich wie: der schwarze Falke"
3. "Ich möchte den letzten Film von Brangelina"
4. "Bully und Winnetou"
und mit Hilfe der ontologischen Interpretation folgenden inhaltliche Kategorien beziehungsweise Klassen zugeordnet:
1. <zeitliche restriktion> <genre> mit <schauspielername>
2. <relation> <filmtitel>
3. <zeitliche restriktion> <class> <schauspielemame>
4. <schaupieler alias> <rollenname>

Nun wird aus der jeweiligen ursprünglichen Suchanfrage jeweils eine erweiterte Suchanfrage erzeugt, indem die Anfragen ontologiebasiert expandiert werden. Das heißt beispielsweise werden Schauspielernamen durch Aliase, bestimmte Kategorien durch Synonyme oder in der Ontologie für diese Kategorien und Begriffe abgelegte andere verwandte Begriffe erweitert und die Suchanfragen gegebenenfalls ferner um zwischen den Suchbegriffen, einschließlich den erweiternd hinzugetretenen bestehende, von der Ontologie erfasste Relationen erweitert.

Dazu können im System beispielsweise folgende Modifikationsregeln für Suchanfragen (im weiteren Expansionsregeln genannt) implementiert sein:
■ R1) WENN Suchbegriffkategorie = <zeitliche Restriktion>, DANN
   1. Synonymausdrücke für zeitliche Restriktion (hier neu) ermitteln
   2. Anfrage um diese Ausdrücke erweitern
■ R2) WENN Suchbegriffkategorie = <Genre>, DANN
   1. Synonymausdrücke für angegebenes Genre (hier Thriller) ermitteln
   2. Anfrage um diese Ausdrücke erweitern
■ R3) WENN Suchbegriffkategorie = <Schauspielername>, DANN
   1. Aliasnamen für angegebenen Schauspieler (hier Bruce Willis) in Ontologie ermitteln
   2. Anfrage um diese Aliase erweitern
■ R4) WENN Suchbegriffkategorie = <Schauspielername> UND (Suchbegriffkategorie = <Rollenname>) in Anfrage vorhanden, DANN (expandieren von Schauspieler und Rollenname mit Filmtitel, nämlich:)
   1. Aliasnamen für angegebenen Schauspieler in Ontologie ermitteln
   2. Suchanfrage um diese Aliase erweitern
   3. Zu angegebenem Schauspieler einschließlich Aliasnamen UND Rollenname passenden Filmtitel in Ontologe oder Datenbank ermitteln.
   4. Um Aliase erweiterte Anfrage zusätzlich um Filmtitel erweitern.
■ R5) WENN (Position(Suchbegriffkategorie = <Relation>) VOR (Suchbegriffkategorie = <Filmtitel>) UND (Suchbegriff (<Relation>) == "ähnlich"), DANN
   1. Für angegebenen Filmtitel ähnliche Filme in Ontologie ermitteln und Filmtitel um diese erweitern.

Ist im System eine im weiteren beschriebene Regel für ein Ranking der Ergebnislisten nach Aktualität und/oder Medientyp/Medienklasse vorhanden, so können auch "Expansions"-Regeln definiert oder implementiert werden, die nur den Teil einer Anfrage expandieren der keine zeitlichen Restriktionen enthält, da dann bei der Anzeige gegebenenfalls bestimmte Ergebnisse, die den in der Anfrage angegebenen zeitlichen Restriktionen entsprechen, ohnehin bevorzugt dargestellt werden. Es muss also nicht in jedem Fall eine Erweiterung der gesamten ursprünglichen Suchanfrage erfolgen. Die Erwiterung kann sich Vielmehr nur auf Instanzen bestimmter inhaltlicher Kategorien beziehungsweise Klassen beziehen, so dass hier eher von einer Modifikation der ursprünglichen Suchanfrage gesprochen werden kann.

Auch kann unter Umständen der Teil einer ursprünglichen Suchanfrage, welcher der Definition der Klasse dient, weggelassen werden, wenn in den zu durchsuchenden Daten 3 ausschließlich Informationen gespeichert sind, die Instanzen der vorgegebenen Klasse entsprechen oder aus Instanzen der vorgegebenen Klasse abgeleitet wurden. Die vorstehend erläuterte und in der Fig. 1 gezeigte Überführung ursprünglich vom Recherchensystem entgegengenommener Suchanfragen jeweils in eine erweiterte Suchanfrage dient dabei auch der Überführung in eine durch einen bestimmten Suchmaschinentyp schnell zu interpretierende einheitliche Form, über die auch Inhalte durchsucht werden können, welche nicht nach Prinzipien einer Ontologie gespeichert sind. Grundsätzlich ist zusätzlich zur hier schwerpunktmäßig beschriebenen Anwendung der Ontologien bei der Suchanfragenerweiterung und der Ergebnisfilterung auch eine direkte Suche in einer oder mehreren Ontologien ohne Umweg über einen indizierten und annotierten Inhalt mit Metainformationen möglich.
Hierzu soll folgendes Beispiel gegeben werden: Wird nach neuen Filmen eines angegebenen Schauspielers gefragt und ist im System ein Ranking nach Aktualität vereinbart worden, was zu einer bevorzugten Anzeige neuerer Filme führt, so kann die zeitliche Restriktion "neu" in der durch das System modifizierten Suchanfrage auch weggelassen werden.

Die entsprechenden Modifikationsregeln können in abstrakter Form beispielsweise wie folgt ausgestaltet sein:
■ R6) WENN Suchbegriffkategorie = <Schauspieleralias>, DANN
   1. Realnamen und andere Aliase für angegebenen Schauspieleralias in Ontologie ermitteln
   2. Anfrage um diese Begriffe erweitern
■ R7) WENN (Suchbegriffkategorie = <zeitliche Restriktion>) UND (<zeitliche Restriktion> == Synonym("neu")) UND Rankingregel-Neu == aktiv DANN
   1. Begriff für zeitliche Restriktion aus Suchanfrage entfernen
■ R8) WENN (Suchbegriffkategorie= <class>) UND (<class> == Synonym("Film")) DANN
   1. Begriff für class (Medienklasse) aus Suchanfrage entfernen.

Diese letzte Regel würde nur implementiert werden, wenn für das System explizit oder implizit vereinbart ist, dass ausschließlich in Informationen gesucht wird, die der Klasse Film entsprechen.
Die hier beispielhaft aufgeführte Klasse Film kann zum Beispiel über folgende Attribute verfügen: <Filmtitel>, <Genre>, <Schauspielername>, <Rollen>, <Zeit>. In einer ähnlichen Form könnten Suchanfragen zum Beispiel für Informationen gestaltet werden, die auf eine in der Ontologie gespeicherten Klasse "Buch" (zum Besispiel mit den Attributen <Titel>, <Genre>, <Autor>, <Verlag>, <Ausgabedatum>, ...) und deren Instanzen ausgerichtet sind.
Auch können in der Ontologie Klassen des Typs "Schauspieler" gespeichert sein, deren Instanzen Attribute für die Instanzen der Klasse Film darstellen. Da nun die Klasse "Schauspieler" ontologiespezifische Beziehungen von einer Klasse "Person" (mit Attributen wie <Name>, <Adresse>, <Geburtsdatum>, <Vater>, <Mutter>, ...), wie zum Beispiel <Mutter> oder <ist Kind von> geerbt haben kann, können damit auch Beziehungen zu anderen Instanzen der Klasse "Person" oder "Schauspieler" dargestellt werden. Ist nun zum angegebenen Attribut <ist Kind von> einer Instanz der Klasse "Schauspieler" ebenfalls eine Person angegeben, die ebenfalls eine Instanz der Klasse "Schauspieler" darstellt, so ist auch folgende Erweiterungsregel für eine Suchanfrage denkbar:
■ R9) WENN Suchbegriffkategorie=<Schauspielername>, >, DANN
   1. Aliasnamen für angegebenen Schauspieler in Ontologie ermitteln
   2. Anfrage um diese Aliase erweitern
   3. Instanz für Attribut <Mutter> ermitteln.
   4. WENN <ist Kind von> in KLASSE<schauspieler> DANN Suchanfrage um Schaupielernamen und aliase für <ist Kind von> erweitern.

Diese Regeln können zum Beispiel in dieser Art interpretativ oder direkt als Software codiert in Speichermitteln des Recherchensystems abgelegt werden. Die erweiterte Menge der einzelnen Anfragen (erweiterte Suchanfragen) kann dabei beispielhaft folgende Form annehmen:
1. [neu neue neuer neues] [Thriller film] [bruce willis b. willis]
2. [schwarzer falke black falcon] [crime movie] [humphrey bogart] □
3. [brangelina brad pitt angelina jolie]
4. [bully michael herbig] [winnetou] [schuh des manitu]

Die Übergabe dieser solchermaßen erweiterten Suchanfagen in das Suchmodul ("Suche"- "search") führt dort im Ergebnis zu einer im Vergleich zur Eingabe der ursprünglichen Suchanfragen erweiterten, als vorläufiges Suchergebnis ("vorläufiges Suchergebnis" - "prelimenary search result") behandelten Ergebnisliste.
Nun wird diese, gegenüber einer direkten Anfrage mit der ursprünglichen Suchanfrage, stark erweiterte Ergebnisliste durch ein Regelwerk 6 hinsichtlich ihres Rankings und/oder gegebenenfalls im Hinblick auf eine eventuelle Reduktion gefiltert.
Dabei können die Suchergebnisse ebenso, wie oben für die Suchanfrage mit Hilfe der ontologischen Interpretation in inhaltliche Kategorien unterteilt werden, um für ein Ranking der Treffer des vorläufigen Suchergebnisses die Anwendung der folgenden Ranking-Regeln zu ermöglichen.
■ Rankingregel-Neu: Wenn (<Zeitangabe> ODER <zeitliche Restriktion>) vorhanden DANN
   1. sortiere neuere Ereignisse nach oben.
■ Rankingregel-Neu2: <zeitliche Restriktion> <Genre> <Schauspieler>, das heißt Filme werden entsprechend zeitlicher Restriktion (zum Beispiel bezogen auf das Erscheinungsdatum) für jeweiliges Genre mit entsprechendem Schauspieler beziehungsweise entsprechenden Schauspielern gerankt, also aufgelistet.
■ Rankingregel-Neu3: <zeitliche restriktion> <class> <schauspieler>, das heißt, danach folgen Instanzen von "class" (in diesem Fall "Film") entsprechend zeitlicher Restriktion mit Schauspieler
■ Rankingregel-Ähnlich: <relation> <filmtitel>, das heißt es folgen im weiteren Ergebnisse mit folgender Relation: Es gibt eine "ähnlich wie" Relation von Film zu Film.
■ Rankingregel-Schauspielerrolle: <Schauspieleralias> <Rollenname>; das heißt schließlich folgen Filme in denen beide, also Schauspieler und Rollenname vorkommen.

Dabei kann die Reihenfolge der abgelegten Regeln und/oder ihre Struktur (Vorkommen aller oder eines Teils der Suchbegriffskategorien in Treffern des vorläufigen Suchergebnisses) auch die Rankingpriorität definieren, das heißt Ergebnisse, die der Regel der ersten abgelegten Struktur entsprechen, werden vor Ergebnissen angezeigt, die in ihrem Inhalt nur eine Anzeige im Rahmen der nächsten Regeln ermöglichen, was im Rahmen einer entsprechenden Steuersoftware implementiert wird.
Durch die Anwendung dieser Regeln werden diejenigen Treffer vorangestellt, die gemäß der Indexbeschreibung der gewünschten Trefferbeschreibung genügen. Dabei fällt auf, dass bei der Generierung der erweiterten Suchanfrage ([brangelina brad pitt angelina jolie]) für Suchanfrage 3 auf eine Einhaltung der vorgegebenen ursprünglichen Anfragestruktur bei der Analyse der ursprünglichen Suchanfrage (Eingangsanalyse) den Regeln zu ihrer Expansion (<zeitliche restriktion> <class> <schauspieler>) verzichtet wird. Dies kann so administrativ und/oder programmtechnisch hinterlegt werden, da aufgrund der angegebenen Ergebnisreihung bei der zweiten Regel (<zeitliche restriktion> <genre> <schauspieler>) eine zeitliche Angabe ohnehin erfolgen würde, und neuere Filme damit im Ranking bevorzugt angezeigt werden würden.
Unter Verwendung ähnlicher wie der für das Ranking beschriebenen Regeln kann im Zuge der Nachbearbeitung des vorläufigen Suchergebnisses gegebenenfalls beziehungsweise, sofern gewünscht, auch nicht nur ein Ranking des vorläufigen Suchergebnisses, sondern sogar ein Ausschluss im Grunde als nicht relevant anzusehender Treffer aus der Ergebnisliste erfolgen.

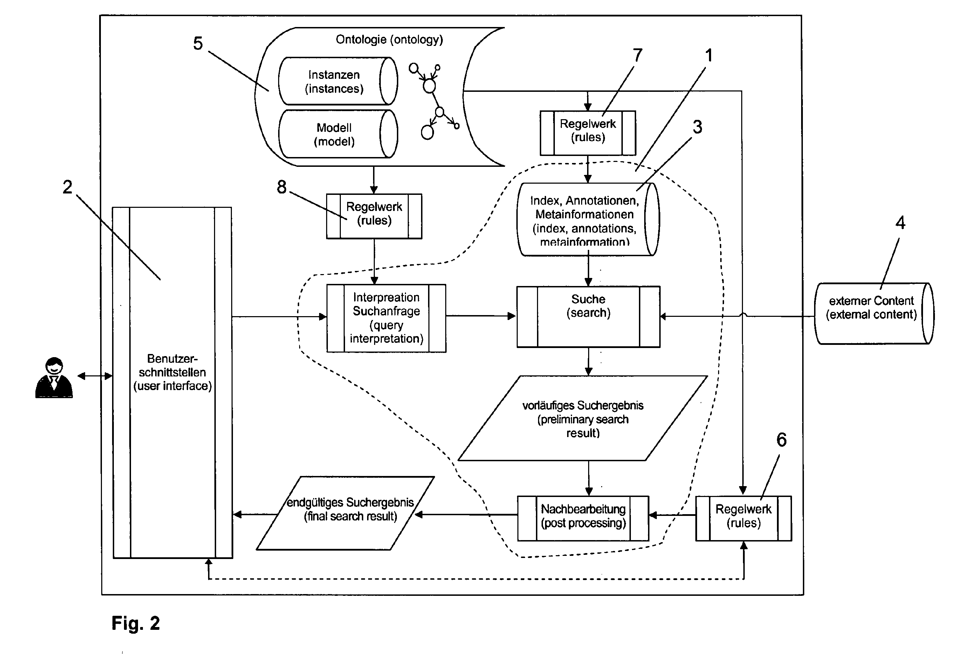

Die Fig. 2 zeigt eine mit der Ausbildungsform nach der Fig. 1 grundsätzlich vergleichbare Ausbildungsform des erfindungsgemäßen Recherchensystems. Ein Unterschied zur Fig. 1 besteht lediglich darin, dass bei der hier gezeigten Ausbildungsform die Daten 3, welche die recherchierbaren Informationen enthalten und die sie indexierenden Daten 4 mit den ergänzenden Annotationen und Metadaten voneinander räumlich getrennt gespeichert sind. Während der indexierenden Daten 4 einschließlich der den Index ergänzenden Daten in Datenspeichermitteln der Verarbeitungseinrichtung 1 selbst gespeichert sind, werden die recherchierbaren Daten 3 demgegenüber extern und gegebenenfalls auch verteilt auf verschiedenen Ressourcen (beispielsweise Servern) eines Netzwerks gehalten. Hierdurch verringert sich der Speicheraufwand in der Kernkomponente, das heißt der Verarbeitungseinrichtung 1. Unabhängig hiervon können die Expansion (Erweiterung) der ursprünglichen Suchanfrage und die Nachbearbeitung des vorläufigen Suchergebnisses in gleicher Weise und nach gleichen Regeln wie zur Fig. 1 erläutert erfolgen.
Die Verarbeitungseinrichtung 1 ist in beiden Figuren durch eine mehrere Komponenten umfassende gestrichelte Linie symbolisiert. Dem Fachmann ist hierbei klar - und entsprechendes ergibt sich auch aus den Patentansprüchen - dass dabei die die Klassenstrukturen und/oder die verschiedenen Regelwerke 6, 7, 8 aufnehmenden Speichermittel wahlweise Bestandteil der Verarbeitungseinrichtung 1 oder der mit ihr zusammenwirkenden Peripherie ausgebildet sein können beziehungsweise als deren jeweilige Bestandteile aufgefasst werden können.

### Verwendete Bezugszeichen

- 1: Verarbeitungseinrichtung
- 2: Benutzerschnittstellen
- 3: Daten (recherchierbare Informationen enthaltende Daten)
- 4: indexierende Daten, Index
- 5: Klassenstruktur
- 6: Regelwerk
- 7: Regelwerk
- 8: Regelwerk

## Patentansprüche

1. Elektronisches Recherchensystem zur Suche nach elektronisch gespeicherten Informationen, bestehend aus einer Verarbeitungseinrichtung (1) mit Benutzerschnittstellen (2) und aus Datenspeichermitteln, die als Bestandteil der Verarbeitungseinrichtung (1) ausgebildet und/oder bezüglich der Verarbeitungseinrichtung (1) extern angeordnet sind und in denen zumindest recherchierbare Informationen enthaltende Daten (3), diese Informationen indexierende Daten (4), wenigstens eine, die recherchierbaren Informationen abbildende Klassenstruktur (5) aus Klassen mit zugeordneten, innerhalb der betreffenden Klassenstruktur (5) vererbten Attributen sowie von der Verarbeitungseinrichtung (1) verarbeitbare Programmdateien gespeichert sind, wobei die Verarbeitungseinrichtung (1) mindestens eine Inferenzeinheit aufweist, durch welche zur Ermittlung eines Suchergebnisses für eine an das Recherchensystem übergebene Suchanfrage Elemente der Klassenstruktur oder Klassenstrukturen (5) und deren Attribute auf der Grundlage von Regeln miteinander verknüpft werden, die ebenfalls in den Datenspeichermitteln in Form von Regelwerken gespeichert sind, **dadurch gekennzeichnet, dass** die in den Datenspeichermitteln gespeicherten Regelwerke umfassen
a.) ein Regelwerk (8) mit Regeln, durch deren Anwendung auf als Suchbegriffe in einer Suchanfrage enthaltene Elemente der Klassenstruktur oder Klassenstrukturen (5) und deren Attribute die betreffende Suchanfrage um weitere Suchbegriffe und/oder um zwischen den Suchbegriffen der Suchanfrage bestehende Relationen erweitert wird,
b.) ein Regelwerk (6) mit Regeln, durch deren Anwendung auf in einem zu der erweiterten Suchanfrage ermittelten vorläufigen Suchergebnis enthaltene Elemente der Klassenstruktur oder Klassenstrukturen (5) und deren Attribute eine Reduktion und/oder ein Ranking die erweiterte Suchanfrage erfüllender Treffer erfolgt und somit das vorläufige Suchergebnis in das auszugebende finale Suchergebnis überführt wird.

2. Elektronisches Recherchensystem nach Anspruch 1, **dadurch gekennzeichnet, dass** das zur Nachbearbeitung des vorläufigen Suchergebnisses verwendete Regelwerk (6) durch einen Nutzer des Systems zur Berücksichtigung eigener Präferenzen des Nutzers veränderbar und/oder durch weitere Regeln ergänzbar ist.

3. Elektronisches Recherchensystem nach Anspruch 1 oder 2, **dadurch gekennzeichnet, dass** die Daten (4) zur Indexierung der recherchierbaren Informationen um zusätzliche, diese Informationen betreffende und bei der Suche berücksichtigte Metadaten und Annotationen ergänzt sind.

4. Elektronisches Recherchensystem nach Anspruch 3, **dadurch gekennzeichnet, dass** in den Datenspeichermitteln ein Regelwerk (7) mit Regeln gespeichert ist, durch deren mittels einer Inferenzeinheit der Verarbeitungseinrichtung (1) erfolgende Anwendung auf die Elemente der Klassenstruktur oder Klassenstrukturen (5) enthaltenden Daten (4) zur Indexierung diese Daten (4) ontologiebasiert um zusätzliche Daten erweiterbar sind.

5. Elektronisches Recherchensystem nach einem der Ansprüche 1 bis 4, **dadurch gekennzeichnet, dass** dessen Schnittstellen mindestens eine Tastatur zur Eingabe textbasierter Suchanfragen umfassen.

6. Elektronisches Recherchensystem nach einem der Ansprüche 1 bis 5, **dadurch gekennzeichnet, dass** dessen Benutzerschnittstellen (2) mindestens ein Zeigegerät, wie eine Computer-Maus oder einen Griffel, für eine durch eine grafische Benutzeroberfläche unterstützte Eingabe von Suchanfragen umfasst.

7. Elektronisches Recherchensystem nach einem der Ansprüche 1 bis 6, **dadurch gekennzeichnet, dass** dessen Benutzerschnittstellen (2) Mittel zur Spracheingabe umfassen.

8. Elektronisches Recherchensystem nach einem der Ansprüche 1 bis 7, **dadurch gekennzeichnet, dass** dessen Benutzerschnittstellen (2) audiovisuelle Mittel zur Präsentation von Suchergebnissen umfassen.

9. Verfahren zur Suche nach elektronisch gespeicherten Informationen in Datenspeicherspeichermitteln eines elektronischen Recherchensystems, in denen neben recherchierbare Informationen enthaltende Daten (3), diese Informationen indexierende Daten (4) und wenigstens eine, die recherchierbaren Informationen abbildende Klassenstruktur (5) aus Klassen mit zugeordneten, innerhalb der betreffenden Klassenstruktur vererbten Attributen gespeichert sind, wobei zur Ermittlung eines Suchergebnisses für eine an das Recherchensystem übergebene Suchanfrage durch mindestens eine als Teil einer Verarbeitungseinheit (1) des Rechensystems ausgebildete Inferenzeinheit Elemente der Klassenstruktur oder Klassenstrukturen (5) und deren Attribute auf der Grundlage von ebenfalls in den Datenspeichermitteln in Form von Regelwerken gespeicherten Regeln miteinander verknüpft werden, **dadurch gekennzeichnet dass** eine Suchanfrage durch die Anwendung von Regeln eines in den Datenspeichermitteln gespeicherten Regelwerks (8) auf in der betreffenden Suchanfrage enthaltene Elemente der Klassenstruktur oder Klassenstrukturen (5) und deren Attribute um weitere Suchbegriffe und/oder um zwischen den Suchbegriffen der Suchanfrage bestehende Relationen erweitert wird und dass ein zu dieser erweiterten Suchanfrage erhaltenes vorläufiges Suchergebnis in das von dem Recherchensystem auszugebende finale Suchergebnis überführt wird, indem durch die Anwendung eines in den Datenspeichermitteln gehaltenen Regelwerks (6) auf in dem vorläufigen Suchergebnis enthaltene Elemente der Klassenstruktur oder Klassenstrukturen (5) und deren Attribute eine Reduktion und/oder ein Ranking der die erweiterte Suchanfrage erfüllenden Treffer erfolgt, wobei die Elemente der Klassenstruktur oder Klassenstrukturen (5), auf welche das jeweilige Regelwerk anzuwenden ist, im Wege einer linguistischen Analyse und einer semantischen Interpretation aus einer sie enthaltenden Suchanfrage oder einem vorläufigen Recherchenergebnis extrahiert werden.
